# EUROPEAN PATENT SPECIFICATION

(11) **EP 3 934 424 B1**
(45) Date of publication and mention of the grant of the patent: **27.07.2022**
(21) Application number: 20717315.4
(22) Date of filing: 25.03.2020
(51) Int. Cl.: A01N 63/30, A01N 25/08, A01P 3/00

(54) **BIOCONTROL AGENT AND METHOD FOR REDUCING THE OCCURRENCE AND IMPACTS OF ARMILLARIA ROOT DISEASE**
BIOLOGISCHES SCHÄDLINGSBEKÄMPFUNGSMITTEL UND VERFAHREN ZUR VERMINDERUNG DES AUFTRETENS UND DER AUSWIRKUNGEN VON ARMILLARIA-WURZELERKRANKUNGEN
AGENT DE LUTTE BIOLOGIQUE ET PROCÉDÉ POUR RÉDUIRE L'APPARITION ET LES IMPACTS DE POURRIDIÉ-AGARIC

(30) Priority: 27.03.2019 US 201962824656 P
(43) Date of publication of application: 12.01.2022
(73) Proprietor: DANSTAR FERMENT AG, 6300 Zug (CH)
(72) Inventor: MCLAUGHLIN, John, Cambridge, Ontario N1R 6B8 (CA)
(74) Representative: J A Kemp LLP
(86) International application number: PCT/IB2020/052830
(87) International publication number: WO 2020/194213

(56) References cited:
- CN-A- 109 618 809
- US-A1- 2017 035 820
- COX K D ET AL: "Interaction dynamics between saprobic lignicolous fungi and Armillaria in controlled environments: Exploring the potential for competitive exclusion of Armillaria on peach", BIOLOGICAL CONTROL, SAN DIEGO, CA, US, vol. 37, no. 3, 1 June 2006 (2006-06-01), pages 291-300, XP024905420, ISSN: 1049-9644, DOI: 10.1016/J.BIOCONTROL.2006.01.012 [retrieved on 2006-06-01]
- Ryan Stevens: "Efficacy of various Hypholoma spp. and Phlebiopsis gigantea as biocontrol agents against root rotting fungi Armillaria ostoyae", , 3 March 2019 (2019-03-03), XP055697809, Retrieved from the Internet: URL:https://knowledgecommons.lakeheadu.ca/ jspui/bitstream/2453/4357/1/StevensR2019m- 1b.pdf [retrieved on 2020-05-25]
- DATABASE MEDLINE [Online] US NATIONAL LIBRARY OF MEDICINE (NLM), BETHESDA, MD, US; June 1996 (1996-06), HOLMER LILLIAN ET AL: "Diffuse competition for heterogeneous substrate in soil among six species of wood-decomposing basidiomycetes.", XP002799124, Database accession no. NLM28307454 & HOLMER LILLIAN ET AL: "Diffuse competition for heterogeneous substrate in soil among six species of wood-decomposing basidiomycetes.", OECOLOGIA JUN 1996, vol. 106, no. 4, June 1996 (1996-06), pages 531-538, ISSN: 1432-1939
- I. A. HOOD ET AL: "Armillaria novae-zelandiae and other basidiomycete wood decay fungi in New Zealand Pinus radiata thinning stumps", FOREST PATHOLOGY, vol. 45, no. 4, 1 August 2015 (2015-08-01) , pages 298-310, XP55698326, DE ISSN: 1437-4781, DOI: 10.1111/efp.12171
- DATABASE MEDLINE [Online] US NATIONAL LIBRARY OF MEDICINE (NLM), BETHESDA, MD, US; June 1996 (1996-06), HOLMER LILLIAN ET AL: "Diffuse competition for heterogeneous substrate in soil among six species of wood-decomposing basidiomycetes.", Database accession no. NLM28307454 & HOLMER LILLIAN ET AL: "Diffuse competition for heterogeneous substrate in soil among six species of wood-decomposing basidiomycetes.", OECOLOGIA JUN 1996, vol. 106, no. 4, June 1996 (1996-06), pages 531-538, ISSN: 1432-1939
- Ryan Stevens: "Efficacy of various Hypholoma spp. and Phlebiopsis gigantea as biocontrol agents against root rotting fungi Armillaria ostoyae", , 14 August 2019 (2019-08-14), pages 1-90, XP055749418, Faculty of Graduate studies of Lakehead University Retrieved from the Internet: URL:https://knowledgecommons.lakeheadu.ca/ jspui/bitstream/2453/4357/1/StevensR2019m- 1b.pdf [retrieved on 2020-11-11]
- HOLMER LILLIAN ET AL: "Diffuse competition for heterogeneous substrate in soil among six species of wood-decomposing basidiomycetes", MEDLINE, US NATIONAL LIBRARY OF MEDICINE (NLM), BETHESDA, MD, US, 1 June 1996 (1996-06-01), XP002799124, DOI: 10.1007/BF00329712

## Description

### TECHNOLOGICAL FIELD

The present disclosure relates to the field of phytosanitary products, specifically to new strains of *Hypholoma* spp. effective in the prevention and/or reduction of fungal diseases in natural forests, plantations and orchards.

### BACKGROUND

Armillaria Root Disease (ARD), caused by several wood decaying fungal species in the genus *Armillaria* (Fr.) Staude, is found throughout the world on a broad variety of host species in natural forests, plantations and orchards. Ten *Armillaria* species have been found in North America. Some, (e.g. *A. ostoyae* and *A. gallica),* are widely distributed, while others, (e.g. *A. tabescens* and *A. mellea),* are more regionally abundant. In Canada, ARD affects all commercially important tree species in south-central British Columbia (Kile et al. 1991; Wargo & Kile 1992), and in southern Ontario, ARD caused by *A. ostoyae* is the most widespread and serious disease affecting conifer plantations (McLaughlin 2001a; McLaughlin *et al.* 2010, 2011). In the United States, ARD is widespread, with impacts particularly severe in the USDA Forest Service's Pacific Northwest and Northern Regions where commercially and ecologically important species (e.g. pines, spruces, true firs, Douglas-fir) of all ages are susceptible to ARD (Lockman & Kearns 2016). The impacts of ARD are not limited to timber species. ARD also causes losses in peach orchards in the SE US (Cox & Scherm 2006) and fields of soft fruit such as blueberry in British Columbia. Likewise, ARD caused by *A. ostoyae* is a primary pathogen of conifers in northern Europe, while *A. mellea* causes ARD of broadleaf species in more southerly regions of Europe (Guillaumin *et al.* 1993).

According to current understanding, the root systems and stumps of trees left after a partial or complete harvest serve as a food base/energy source for *Armillaria* already present to some degree on the root systems of trees which do not exhibit noticeable symptom of infection (Whitney *et al.* 1989). The sudden increase in the pathogen's food base provides the energy it needs to spread and cause disease in adjacent healthy trees. Indeed, ARD infects new hosts when uninfected roots of susceptible trees contact infected stumps or roots. The fungus grows across root contacts and invades the root tissues of new hosts. *Armillaria* can also spread by means of mycelial cords called rhizomorphs, which are capable of growing through the soil from infected to uninfected roots. *Armillaria* infection kills the root, resulting in reduced uptake of nutrients and water, reduced growth and may eventually kill the tree while it is standing. Once mortality pockets appear, they can continue to spread for decades, gradually killing trees in an ever-expanding circle (McLaughlin 2001b).

Whilst there is no effective chemical control of *Armillaria* at present, two operational treatments are currently used to reduce the spread of the disease and to protect new plantings. One option includes post-harvest mechanical removal of stumps and roots ("stumping") (Morrison *et al.* 1988) and the second option is converting stands to species that are more resistant to ARD (Shaw *et al.* 2012).

Another potential management option for ARD is biological control. As noted by Keča (2009), biological agents potentially capable of controlling ARD should:
a. colonize woody substrates or be a rhizosphere component,
b. should produce more inoculum than *Armillaria,*
c. inhibit or prevent rhizomorph and mycelial development in substrates already colonized, and ideally,
d. invade these substrates and replace *Armillaria.*

A candidate biocontrol agent is *Hypholoma fasciculare,* a cord forming (i.e., produces rhizomorphs), non-pathogenic wood decay fungus that occupies a similar ecological niche as *Armillaria* species, and therefore meets the first of the criteria listed above. *H. fasciculare* has been included in ARD biocontrol studies in British Columbia (Chapman & Xiao 2000; Chapman *et al.* 2004), the United States (Cox & Scherm 2006), Serbia (Keča 2009) and New Zealand (Hood *et al.* 2015). Chapman and Xiao (2000) found that after six months of incubation, *A. ostoyae* was replaced by a mixture of unnamed strains of *H. fasciculare* from the bark of root discs previously colonized by *Armillaria* and paired with discs colonized by *H. fasciculare,* but did not report replacement of *A. ostoyae* in woody tissue of the root. The commercial production and application of *H. fasciculare* as a biological control against ARD has been hindered by the lack of effective strains of *H. fasciculare.*

Because of the problems associated with the use of chemicals or mechanical methods, safer and more effective methods for biologically controlling trees from ARD disease are clearly needed. It would be highly desirable to be provided with new isolates of *Hypholoma* spp. that have the effectiveness required for commercial use as a biological control agent for controlling ARD populations and/or preventing the spread of *Armillaria* in forests, commercial plantings or nurseries so that drastic measures such as uprooting stumps and root remnants are not (or less) contemplated or employed.

Hood et al., "Forest Pathology 45.4 (2015): 298-310 relates to a study to find a biological control agent for armillaria root disease.

### BRIEF SUMMARY

The scope of the invention is defined by the claims. Any aspects, embodiments and examples of the present disclosure which do not fall under the scope of the appended claims do not form part of the invention and are merely provided for illustrative purposes.

The present disclosure relates to a particular *Hypholoma* isolates which can act as a biocontrol agent and reduce and suppress the spread of ARD. In some embodiments, the isolates exhibit strong antagonism towards ARD and to colonize or establish epiphytic hyphal cord networks on roots. The present disclosure further provides a particular, effective new *H. fasiculare* isolate and methods of using the isolate to efficiently contain the spread of ARD or replace *Armillaria* in root tissue it previously occupied. The present disclosure further relates to new *H. capnoides* isolates which can also act as a biocontrol agent and reduce and suppress the spread of ARD.

According to a first aspect, the present disclosure provides an isolated culture of *Hypholoma fasiculare,* wherein the isolated culture is or comprises *H. fasiculare* strain Pinnel-B (DSM 32925).

According to a second aspect, the present disclosure relates to an isolated culture of *Hypholoma capnoides,* wherein the isolated culture is or comprises *H. capnoides* strain TAK02 (DSM 33061).

According to a third aspect, the present disclosure relates to an isolated culture of *Hypholoma capnoides,* wherein the isolated culture is or comprises *H. capnoides* strain TAK05 (DSM 33078).

According to a fourth aspect, the present disclosure relates to an inoculum unit comprising an isolated culture of *H. fasciculare, H. capnoides* and/or *H. sublateritium* and a delivering medium. In an embodiment, the isolated culture of said inoculum unit is a culture of H. *fasciculare.* In another embodiment, the culture of *H. fasciculare* is *H. fasciculare* strain Pinnel-B (DSM 32925), *H. fasciculare* strain OKM-2932-T (USDA), *H. fasciculare* strain RLG-12668-Sp (USDA) and/or *H. fasciculare* HHB-14801-Sp (USDA). In yet another embodiment, the isolated culture of *H. fasciculare* is or comprises *H. fasciculare* strain Pinnel-B (DSM 32925). Alternatively, the isolated culture can be or comprise a culture of H. *sublateritium.* In an embodiment, the isolated culture of *H. sublateritium* is *H. sublateritium* HHB-11948-Sp (USDA) or *H. sublateritium* FP-90085-Sp (USDA). In still another embodiment, the isolated culture is or comprises a culture of *H. capnoides.* For example, the isolated culture of *H. capnoides* is *H. capnoides* TAK02 (DSM 33061) and/or *H. capnoides* TAK05 (DSM 33078). In an embodiment, the delivering medium of said inoculum unit is in a solid form or a liquid form. In yet another embodiment, the delivering medium is in a solid form and comprises a solide substrate. In still another embodiment, said solid substrate comprises wood, sawdust, wood chips, agricultural wastes, bran cereals, cellulose-containing substances or a mixture thereof. For example, said solid substrate can comprise wood, sawdust, wood chips or a mixture thereof. In an embodiment, the isolated culture and/or the inoculum unit of the present disclosure is, when contacted with a woody plant, for reducing the *Armillaria* population or delaying or impeding the spread of an established *Armillaria* infection centre in a soil. In specific embodiment, the isolated culture or inoculum is for contacting one or more roots of the woody plant. In some embodiment, the isolated culture described herein or the inoculum described herein has an ability to internally colonize or invade and establish within woody root tissues.

According to a fifth aspect, the present disclosure provides the use of the isolated culture and/or the inoculum unit (which can, in some embodiments, be a biological control agent) for contacting a woody plant for reducing the *Armillaria* population or delaying or impeding the spread of an established *Armillaria* infection centre in a soil. In an embodiment, said isolated culture and/or the inoculum unit are placed in contact with one or more roots of the woody plant or are for contacting with one or more roots of the woody plant. In yet another embodiment, the woody plant is a tree or a tree stump. For example, the woody plant is a tree stump. In still another embodiment, the *Armillaria* population comprises *A. ostoyae*, *A. mellea*, *A. gallica* and/or *A. tabescens.* For example, the *Armillaria* population can comprise *A. ostoyae.* In another embodiment, the woody plant is from a species of pinus (*Pinus* spp.), cedar, firs (*Abies* spp.), spruces *(Picea* spp.), hemlocks (*Tsuga* spp.), maple (*Acer* spp.) birch *(Betula* spp.), oak *(Quercus* spp.), poplars *(Populus* spp.), ashes *(Fraxinus* spp.), stone fruit trees *(Prunus* spp.), brasswood (*Tilia* spp.) or blueberries *(Vaccinium* spp.).

According to a sixth aspect, the present disclosure provides a method for reducing an *Armillaria* population or for delaying or impeding the spread of an established *Armillaria* infection centre in the soil. The method comprises contacting a woody plant with an isolated culture or an inoculum unit comprising a culture of *H. fasiculare*, *H. capnoides* or H. *sublateritium.* In some embodiments, the method further comprises preparing the inoculum unit. In an embodiment, is the inoculum unit comprises an isolated culture of *H. fasciculare.* In another embodiment, the isolated culture of *H. fasciculare* is *H. fasciculare* strain Pinnel-B (DSM 32925), *H. fasciculare* strain OKM-2932-T (USDA), *H. fasciculare* strain RLG-12668-Sp (USDA) and/or *H. fasciculare* HHB-14801-Sp (USDA). For example, the isolated culture of *H. fasciculare* can be or comprise *H. fasciculare* strain Pinnel-B (DSM 32925). In yet another embodiment, is the inoculum unit comprises an isolated culture of *H. sublateritium* and is, for example, an isolated culture of *H. sublateritium* is *H. sublateritium* HHB-11948-Sp (USDA) or *H. sublateritium* FP-90085-Sp (USDA). In still another embodiment, the inoculum unit is or comprises an isolated culture of *H. capnoides* and is, for example, *H. capnoides* TAK02 (DSM 33061) and/or *H. capnoides* TAK05 (DSM 33078). In an embodiment, the inoculum unit is in a solid form or in a liquid form. For example, the inoculum unit is in a solid form and comprises a culture of *H. fasciculare, H. capnoides* or *H. sublateritium* adhered to a solid substrate. In another example, the inoculum unit is in a solid form and comprises a solid substrate. In an embodiment, the solid substrate comprises wood, sawdust, wood chips, agricultural wastes, bran cereals, cellulose-containing substances or a mixture thereof. For example, the solid substrate can comprise wood, sawdust, wood chips or a mixture thereof. In another embodiment, the solid substrate further comprises a source of nitrogen as, for example, ammonium lignosulfonate. In an embodiment, the method comprises contacting the inoculum unit with one or more roots of the woody plant. In another embodiment, the method comprises placing the inoculum unit beneath the surface of the ground (for example for contacting with one or more roots of a woody plant). In an embodiment, the woody plant is a tree or a tree stump and is, for example, a tree stump. In another embododiment, the *Armillaria* population comprises *A. ostoyae, A. mellea, A. gallica* and/or *A. tabescens* and is or comprises, for example, *A. ostoyae.* In yet another embodiment, examples of woody plant can be species of pinus (*Pinus* spp.), cedar, firs (*Abies* spp.), spruces *(Picea* spp.), hemlocks (*Tsuga* spp.), maple (*Acer* spp.) birch *(Betula* spp.), oak *(Quercus* spp.), poplars *(Populus* spp.), ashes *(Fraxinus* spp.), stone fruit trees *(Prunus* spp.), brasswood (*Tilia* spp.) or blueberries *(Vaccinium* spp.). More particularly, the woody plant can be *Pseudotsuga menziesii* (Douglas-fir), *Pinus contorta* (lodgepole pine), *Pinus resinosa* (red pine), *Pinus strobus* (white pine), *Thuja plicata* (western red cedar), *Abies* spp., *Picea* spp., *Betula papyrifera, Quercus rubra, Populus tremuloides* or *Prunus nigra.* In an embodiment, the woody plant can be *Pinus contorta, Pinus resinosa* or *Pinus strobus.*

According to a seventh aspect, the present disclosure provides a method for reducing an Armillaria population in soil comprising (a) contacting a woody plant with an inoculum unit comprising an isolated culture of *H. fasciculare, H. capnoides or Hypholoma sublateritium* in an amount sufficient to reduce the *Armillaria* population in the soil; (b) obtaining a test root sample from the woody plant after step (a) and from untreated control root sample(c) quantifying and comparing the changes in the *Armillaria* population in the test root sample and the untreated control root sample; and (d) observing a reduction in the *Armillaria* population in the test root sample when compared to the untreated control root sample. In some embodiments, the method further comprising preparing the inoculum unit comprising the isolated culture. In additional embodiment, the method comprises contacting the incolum unit with one or more roots of the woody plant. In an embodiment, the isolated culture of H. *fasciculare* is or comprises *H. fasciculare* strain Pinnel-B (DSM 32925). In a further embodiment, the isolated culture of *H. capnoides* is or comprises *H. capnoides* TAK02 (DSM 33061) and/or *H. capnoides* TAK05 (DSM 33078). In an embodiment, the woody plant is a tree or a tree stump and is, more particularly, a tree stump. In an embodiment, the *Armillaria* population comprises *A. ostoyae, A. mellea, A. gallica* or *A. tabescens* and, in a further embodiment, *A. ostoyae.*

According to an eight aspect, the present disclosure concerns a method of preparing an inoculum unit. The method comprises contacting the isolated culture described herein with a delivering medium. In an embodiment, the delivering medium is a liquid or a solid substrate. In still another embodiment, the solid substrate comprises wood, sawdust, wood chips, agricultural wastes, bran cereals, cellulose-containing substances or a mixture thereof. In still a further embodiment, the solid substrate comprises wood, sawdust, wood chips or a mixture thereof. In still another embodiment, the solid substrate further comprises a source of nitrogen. In yet another embodiment, the nitrogen source is ammonium lignosulfonate.

### DETAILED DESCRIPTION

The present disclosure relates generally to *Hypholoma strains,* their use in compositions (such as inoculum units) and methods for biologically controlling ARD in woody plants, in particular, conifers and broadleaf trees. The present disclosure relates to an *Hypholoma fasciculare* isolate as well as *H. capnoides* isolates which can also act as a biocontrol agent and reduce and suppress the spread of ARD.

### 1. Strains of Hypholoma spp.

### 1.1 Strain of Hypholoma fasciculare

The following strain has been deposited on the 20 September 2018, at the German Type Culture Collection (DSMZ), Inhoffenstraβe 7 B, 38124 Braunschweig (Germany). The deposit of the deposited strain whose reference is *H. fasciculare* designated as Pinnel-B , was identified by the DSMZ with the accession number DSM 32925 once said International Depositary Authority declared that said strain in question was viable, under the stipulations of the Budapest Treaty on the International Recognition of the Deposit of Microorganisms for the Purpose of Patent Procedure.

The original strain was obtained directly from the soil and was kept under the acquisition name Pinnel-B.

Characterization of the isolate of *H. fasciculare* Pinnel-B

**Kingdom Fungi**

| | |
|---|---|
| Division | Basidiomycota |
| Class | Agaricomycetes |
| Order | Agaricales |
| Family | Strophariaceae |
| Genus | *Hypholoma* |
| Species | fasciculare |
| Strain | Pinnel-B |

Strain Pinnel-B is a purified isolate. *"H. fasciculare* strain Pinnel-B" includes any cultures, spores, cells and progeny produced from said strain such as by asexual reproduction. As described below, strain Pinnel-B exhibits a number of advantageous properties over other strains of *H. fasciculare.*

As presented in the Examples 1 to 3, several studies were conducted to compare the potential of *H. fasciculare* strain Pinnel-B with other strains of *H. fasciculare* and other *Hypholoma* species as a biocontrol agent against ARD. The performance of one of the strains included in our study, *H. fasciculare* OKM-7107-Sp, has been previously reported by Cox & Scherm (2006). Because *H. fasciculare* OKM-7107-Sp was the only named and available strain of *H. fasciculare* reported in published studies of biocontrol of ARD, the latter was also included in our studies. This strain, *H. fasciculare* OKM-7107-Sp, was treated as a benchmark against which the performance of the other test strains was measured, especially *H. fasciculare* Pinnel-B. In the study by Cox and Scherm (2006), *H. fasciculare* OKM-7107-Sp, along with strains of other species of wood decay fungi, reduced the growth of *Armillaria tabescens* and *Armillaria mellea* under the bark of peach root pieces previously colonized by the Armillaria species "... but none of the antagonists was able to internally colonize root segments pre-colonized by *Armillaria".*

In the Examples below, the ability of *H. fasciculare* strain Pinnel-B to combat *A. ostoyae* is shown. The studies were designed so as to allow assessment of the various test strains for a superior biocontrol agent capable of controlling ARD; that is, it should:
a. "colonize woody substrates or be a rhizosphere component": *Hypholoma* species are forest floor and soil saprophytes that colonize woody debris, roots and stumps (Boddy *et al*. 2006), and are known also for their capacity for subcortical mycelial growth (Rayner 1979). Thus, *H. fasciculare* Pinnel-B meets the first of the criteria.
b. "should produce more inoculum than *Armillaria":* Experiments have been conducted to compare the various strains of *Hypholoma* and *A. ostoyae* in their ability to grow rapidly and produce mycelial mass on a minimal medium (pine-wood infusion medium) and rich medium (2% MA) at a temperature (15°C) simulating below-ground conditions (Dowson *et al*. 1989; Cox & Scherm 2006). The *A. ostoyae* strains grew slowly on both media, ranking at or near the bottom among all the strains tested. *H. fasciculare* strain Pinnel-B exhibited superior growth, ranking first in radial growth on both media and far exceeding the performance of the benchmark strain, *H. fasciculare* strain OKM-7107-Sp, which on the 2% MA medium did not perform significantly greater than the *A. ostoyae* Ao B249-28. Production of mycelial mass was related to radial growth rate, and *H. fasciculare* Pinnel-B produced significantly more (~2-3 times as much) mycelial mass than both the *A. ostoyae* strains and *H. fasciculare* OKM-7107-Sp. Therefore, *H. fasciculare* strain Pinnel-B is a superior biocontrol strain of *H. fasciculare* while *H. fasciculare* OKM-7107-Sp falls short.
c. "inhibit or prevent rhizomorph and mycelial development in substrates already colonized": Experiments have been conducted to compare the various strains of *Hypholoma* on their ability to suppress the growth of *A. ostoyae in vitro,* and also in the nature of their interaction with *A. ostoyae. H. fasciculare* strain Pinnel-B significantly suppressed the growth of two different strains of *A. ostoyae* on both media. This may have been due, in part, to the rapid growth rate of *H. fasciculare* Pinnel-B, which put it in close proximity to the advancing front of the *Armillaria* culture before it could expand very far. Once in close proximity, the *Armillaria* would become competitively engaged with H. *fasciculare* Pinnel-B. *H. fasciculare* Pinnel-B aggressively and totally overgrew the *Armillaria* cultures in all replications. Cox & Scherm (2006) reported very low viability of *Armillaria* cultures overgrown by antagonists, probably due to "hyphal interference", a form of antagonism between species mediated by release of non-enzymatic antibiotics that cause degradation and death of the hyphae of the other species (Boddy 2000). In contrast, *H. fasciculare* strain OKM-7107-Sp did not consistently suppress the growth of the *Armillaria* strains and in its interactions with *A. ostoyae* did not exhibit combative behaviour, at best achieving a "truce" with the advancing *Armillaria* mycelium, in the form of a narrow zone of inhibition where hyphae of each culture were excluded, suggesting a much lower inherent capacity for engaging in hyphal interference. The suppressive and combative behaviour of *H. fasciculare* strain Pinnel-B towards the strains of *A. ostoyae* observed in this study provides evidence that *H. fasciculare* strain Pinnel-B is a superior biocontrol strain compared to known literature of *H. fasciculare*, *.*
d. "invade these substrates and replace *Armillaria"*: Experiments have been conducted to compare the various strains of *Hypholoma* on their ability to forage for, discover, and overgrow woody tissue already colonized by *A. ostoyae,* and then to invade this woody tissue and replace the *Armillaria.* As in the other studies, significant variation was observed among the strains of *Hypholoma,* with many of them being slow in their foraging behaviour or totally unsuccessful, as was the case with the benchmark strain, H. *fasciculare* strain OKM-7107-Sp. *H. fasciculare* strain Pinnel-B, however, succeeded in quickly establishing a network of foraging hyphal cords that appeared to be attracted to the *Armillaria* root discs. The attractive property of the *Armillaria* root discs and the ability of *H. fasciculare* strain Pinnel-B to respond to it were clearly apparent, as no such behaviour was observed in the self-paired replicates of *H. fasciculare* strain Pinnel-B. Succession of decay fungi in woody substrates is widely observed in nature (Boddy 2000) and it appears that the colonizing strategy of *H. fasciculare* is to form a dense layer of hyphal cords on the outside of the targeted woody substrate and release enzymes, antibiotics and organic acids to the inside (de Boer *et al*. 2010), suppressing or killing competitors. Thus, the ability to form a layer of mycelial overgrowth on root discs already occupied by *Armillaria,* observed with *H. fasciculare* strain Pinnel-B, is an indicator that the strain possesses this capacity. Whereas replacement of *Armillaria* from the bark of root pieces has been previously reported (e.g. Chapman & Xiao 2000, Cox & Scherm 2006), the ability and rate of invasion and replacement in more inner tissue types has not been well investigated. In our study we observed that *H. fasciculare* strain Pinnel-B demonstrated a very high success rate.

Pinnel-B is an isolated strain of *H. fasciculare* that exhibits a number of characteristics that make it particularly effective as a biological control agent for the reduction of the occurrence and impact of ARD. More particularly, *H. fasciculare* strain Pinnel-B is able to penetrate woody root tissues and to establish inside woody root tissues. In an embodiment, H. *fasciculare* strain Pinnel-B has an improved ability to internally colonize or invade and establish within woody root tissues, including inner bark, sapwood and pith area compared to, amongst others, the benchmark strain, *H. fasciculare* strain OKM-7107-Sp. Once the woody root tissues are occupied by the biological control agent, *H. fasciculare* strain Pinnel-B has the capacity to displace (or to block growth of to suppress) the occupying organism as, for example, *Armillaria.* This competitive exclusion is a principal means by which H. *fasciculare* reduces the occurrence and impact of ARD. In another embodiment, H. *fasciculare* strain Pinnel-B is able to block further colonization of root tissue by the ARD pathogen simply by pre-emptive occupation of the tissues.

Without wishing to be bound to theory, it is understood that that *H. fasciculare* has the ability to protect trees from ARD by: pre-emptive colonization of below-ground substrate (i.e. roots) that *Armillaria* would colonize and use to fuel its attack on the roots of adjacent living trees; by restricting the further colonization of roots already occupied by *Armillaria*; or by replacing *Armillaria* in occupied root tissue. The aim of the presence of *H. fasciculare* strain Pinnel-B is to protect residual trees around an infected tree/stump or to protect new trees that will be planted where *Armillaria* has been present below ground by reducing *Armillaria*'s presence and strength.

### 1.2 Strains of Hypholoma capnoides

The following strain has been deposited on the 8 February 2019, at the German Type Culture Collection (DSMZ), Inhoffenstraβe 7 B, 38124 Braunschweig (Germany). The deposit of the deposited strain whose reference is *H. capnoides* designated as TAK02, was identified by the DSMZ with the accession number DSM 33061 once said International Depositary Authority declared that said strain in question was viable, under the stipulations of the Budapest Treaty on the International Recognition of the Deposit of Microorganisms for the Purpose of Patent Procedure.

The following strain has been deposited on the 5 March 2019, at the German Type Culture Collection (DSMZ), Inhoffenstraβe 7 B, 38124 Braunschweig (Germany). The deposit of the deposited strain whose reference is *H. capnoides* designated as TAK05, was identified by the DSMZ with the accession number DSM 33078 once said International Depositary Authority declared that said strain in question was viable, under the stipulations of the Budapest Treaty on the International Recognition of the Deposit of Microorganisms for the Purpose of Patent Procedure.

Characterization of the isolate of *H. capnoides* TAK02 and TAK05

**Kingdom Fungi**

| | |
|---|---|
| Division | Basidiomycota |
| Class | Agaricomycetes |
| Order | Agaricales |
| Family | Strophariaceae |
| Genus | *Hypholoma* |
| Species | *capnoides* |
| Strains | TAK02 and TAK05 |

Strains TAK02 and TAK05 are purified isolates. "*H. capnoides* strains TAK02 and TAK05" include any cultures, spores, cells and progeny produced from said strain such as by asexual reproduction. As described in the Examples and as described above for H. *fasciculare*, several studies were conducted to compare the potential of *H. capnoides* strains TAK02 and TAK05 with other strains of *H. capnoides* as a biological agent against ARD. The strains TAK02 and TAK05 exhibit a number of advantageous properties over other strains of *H. capnoides.*

### 1.3 Other strains

It was also found that *H. fasciculare* strain OKM-2932-T (USDA), *H. fasciculare* strain RLG-12668-Sp (USDA), *H. fasciculare* HHB-14801-Sp (USDA), *H. sublateritium* OKM-6192-Sp (USDA), *H. sublateritium* HHB-11948-Sp (USDA) and *H. sublateritium* FP-90085-Sp (USDA) have the ability to invade woody root tissue and replace *Armillaria.*

### 1.4 Identification of the strains

The fungus was first identified in the field on the roots of a decaying conifer stump by its characteristic white hyphal cords. The next step in identifying the fungus was to use the Polymerase Chain Reaction method (PCR) to obtain sequence data from the Internal Transcribed Spacer Region of the nuclear ribosomal DNA of the fungus. The identification was confirmed by conducting a BLAST search of the DNA sequence data library (GenBank) held by the NCBI (National Center for Biotechnology Information) for identical sequence data.

### 2. Preparation of an inoculum unit

According to an aspect, the present disclosure relates to the use of a culture of H. *fasciculare* strain Pinnel-B for biologically controlling ARD of woody plants such as conifers and broadleaf trees. More particularly, the culture of *H. fasciculare* strain Pinnel-B of the present disclosure is particularly suitable for reducing, delaying, impeding, preventing, inhibiting or eliminating, either partially or fully, the spread of *Armillaria* populations and/or the spread of an established *Armillaria* infection centre in the soil. The present disclosure further relates to new *H. capnoides* isolates which can also act as a biocontrol agent and reduce and suppress the spread of ARD.

As used herein, the term "woody plants" refers to conifers as well as woody broadleaf vegetation, and more particularly to trees and shrubs. As used herein, the term "woody plants" refers to trees or tree stumps. A non-exhaustive list of woody plants includes the ARD-susceptible commercially important species of conifers: Douglas-fir (*Pseudotsuga menziesii*), pines [e.g. lodgepole pine (*Pinus contorta*), red pine (*Pinus resinosa*), white pine (*Pinus strobus*), jack pine (*Pinus banksiana*), western white pine (*Pinus monticola*), Ponderosa pine (*Pinus ponderosa*)], true firs [e.g. balsam fir (*Abies balsamea*), subalpine fir (*Abies lasiocarpa*)], spruces [e.g. black spruce (*Picea mariana*), white spruce (*Picea glauca*), red spruce (*Picea rubens*), Engelmann spruce (*Picea engelmannii*)], hemlocks [e.g. western hemlock (*Tsuga heterophylla*), eastern hemlock (*Tsuga canadensis*)], western larch (*Larix occidentalis*); broadleaf species: maples [e.g. sugar maple (*Acer saccharum*), red maple (*Acer rubrum*)], birches [e.g. white birch (*Betula papyrifera*), yellow birch *(Betula alleghaniensis*)], oaks (e.g. *Quercus rubra*), poplars [e.g. balsam poplar *(Populus balsamifera*), trembling aspen (*Populus tremuloides*), big-tooth aspen *(Populus grandidentata*)], ashes [e.g. white ash (*Fraxinus Americana*), green/red ash *(Fraxinus pennsylvanica*)], beech (*Fagus grandifolia*), black cherry (*Prunus nigra*), peach *(Prunus persica*), basswood (*Tilia Americana*); and the soft-fruit blueberry species *(Vaccinium* spp.).

A "biological control" is herein defined as the control of a pathogen by using a second organism. Biological control agents of plant diseases are most often referred to as "antagonists". Successful biological control reduces the population density of the target species. The term "biocontrol agent" (which is used interchangeably with the term "biological control agent") refers to a microorganism or compound or composition which originates in a biological matter and is effective in the treatment, control, prevention, amelioration, inhibition, elimination or delaying the onset of at least one of bacterial, fungal, viral, insect, or any other plant pest infections or infestations and inhibition of spore germination and hyphae growth. In specific embodiments, the "biological control agent" as used herein refers to a microorganism which can reduce the effects of plant disease when applied in the environs of the plant disease causing organism. It is appreciated that any biocontrol agent is environmentally safe, that it, it is detrimental to the target species, but does not substantially damage other species in a non-specific manner. As described herein, *H. fasciculare* strain Pinnel-B as well as *H. capnoides* strains TAK02 and TAK05 are examples of a biological control agents.

It is appreciated that the biological control agent is also effective for treating, preventing, ameliorating, inhibiting, reducing, eliminating or delaying the spread of an established *Armillaria* infection centre in a managed forest, plantation or orchard, thus protecting adjacent trees from the disease. The ARD is caused by *A. ostoyae, A. mellea, A. gallica* and/or *A. tabescens.* In an embodiment, the ARD is caused by *A. ostoyae.*

As used herein, the terms "treat" or "treating" include substantially inhibiting, slowing or reversing the progression of a condition, substantially ameliorating symptoms of a condition or substantially preventing the appearance of symptoms of a condition, said condition is brought about in plants and woody plants by pathogens, including fungal pests, spores or hyphae.

The term "prevent" is intended to mean the countering in advance of fungal proliferation, infestation, infection, spore germination and hyphae growth. It is understood that, when used in a preventative manner, the biological control agent is applied prior to exposure to said pathogen.

The terms "ameliorate" and "amelioration" relate to the improvement in the growth and health of the managed woody plants (such as natural forest, plantation or orchard) brought about by the biological control agent and methods wherein said improvement may be manifested in the forms of reduced incidence of ARD and the individual tree growth loss and/or mortality it causes. In general, the term refers to the improvement in the overall health and productivity of a managed natural forest, plantation or orchard.

The term "inhibit" and all variations of this term is intended to encompass the restriction, retardation, reduction, decrease or prohibition of fungal growth, as well as spore germination.

The term "eliminate" relates to the substantial eradication or removal of an established fungi population by contacting them with the composition of the present disclosure. The fungus of the present disclosure has the capacity to penetrate, invade and establish into internal host tissues and to suppress and/or control diseases in woody plants caused by ARD.

The terms "delay", "retard" or "impede" and all variations thereof are intended to encompass preventing or slowing the progress of fungal growth, spore germination and hyphae growth for a period of time, such that said fungal growth, infestation, infection, spore germination and hyphae growth do not progress as far along in development, or appear later than in the absence of the treatment according to the present disclosure.

The inoculum unit of the present disclosure comprises an effective amount of *Hypholoma* (such as a *H. fasciculare* fungus) as defined previously, in association with an environmentally acceptable carrier, delivering medium or substrate. In an embodiment, the strain Pinnel-B, TAK02 or TAK05 are used alone or in combination. Alternatively, the strains of the present disclosure are used in combination with other strains of *Hypholoma* or with fungi belonging to other genus. The term "inoculation unit" or "inoculum unit" as used herein refers to a carrier, delivering medium or substrate that has been colonized with *Hypholoma.* The inoculum unit may be in a solid form or a liquid form. An "environmentally acceptable carrier, delivering medium or substrate" refers to any suitable carriers, delivering medium or substrate non-toxic to the fungus and not harmful to non-target vegetation, animals or humans. It may also be biodegradable. A person skilled in the art will know how to select suitable carrier, delivering medium or substrate. According to an embodiment, the carrier, delivering medium or substrate comprises nutritive elements and enough resources suitable for sustaining the growth of the fungus.

Also provided are methods for the production of an inoculum unit of *Hypholoma,* the method comprising inoculating a carrier, delivering medium or substrate with an isolated culture of the fungus and incubating the substrate under conditions suitable for fungal growth to produce a culture of *Hypholoma.* This step may be accomplished by any known methods in the art.

In an embodiment, the inoculum unit is solid and *Hypholoma* is cultured on a solid substrate. The solid substrate will include those on which the organism can be cultured, such as wood, sawdust, wood chips, wood fibre material, agricultural wastes, bran cereals, cellulose-containing substances or a mixture thereof.

Conditions suitable for mycelial growth of *Hypholoma* for making the inoculum unit are known in the art. For example, cultures can be started on standard concentration PDA (potato dextrose agar) plates and incubated at 15°C until fully colonized. The culture is then transferred into a sterilized grain or a mixture of sterilized grains (rice, wheat, rye, oat, millet, sorghum, corn, barley, etc.). Prior to inoculation, the grain is sterilized according to any method known in the art. The inoculated grain incubated at 15°C until fully colonized. The grain inoculum is used to inoculate the delivering medium or substrate in a container comprising wood, sawdust and/or wood chips, agricultural wastes, bran cereals or other cellulose-containing substances, or mixtures thereof. The delivering medium can be sterilized prior to the inoculation with the grain inoculum. A variety of containers can be used for incubation, including high-density polyethylene and polypropylene bags, glass and polypropylene jars, metal containers, etc. The containers are incubated at around 15°C in refrigerated warehouses until the inoculum unit is fully colonized by the fungus, i.e. by the mycelium of the fungus.

Alternatively, the inoculum unit may be in a liquid form. This liquid formulation can be produced by any known manner, for example by mixing the mycelium of the fungus (e.g. obtained from solid or liquid culture) with a liquid carrier. Liquid carriers useful in the present disclosure include aqueous, organic or non-organic based liquid solutions that are not toxic to fungi and the environment. For example, the liquid carrier can be water or any emulsions with water as the continuous phase (i.e. an oil in water emulsions).

The concentration of fungus that is used, in terms of mycelia, can range from about 1×10⁵ to about 1×10¹¹ CFU (colony forming unit)/ml in the formulation may vary depending on the conditions in which the formulation is to be used, e.g. the woody plant species to be protected, the degree of infection, the climatic conditions, the application method, woody plant material, geographical conditions and selected formulation. In terms of treatment and protection, the concentration (the "effective amount") of fungus that is used is the amount enough to successfully and quickly colonize the residual stump and root system and to hinder the progression of the fungal disease.

Further agents can be added to the delivery medium or substrate (in a solid or liquid form) of the present disclosure. Agents that may be beneficial to the fungus itself may be added. For instance, the beneficial agents may be those that optimize the efficiency of the fungus towards ARD, those that promote its growth or its viability, those that promote its ability to adapt to the environment (for example dry conditions) may be used simultaneously. Examples of such beneficial agent includes vitamins, growth factors, nutrients (such as proteins, peptides, carbohydrates, lipids), fertilizers, fungicides, etc) or mixtures thereof. More particularly, a nitrogen source (e.g. ammonium lignosulfonate) can be added to the delivering medium or substrate to help *Hypholoma* spp. strains get started colonizing the stumps and roots. Furthermore, emulsifiers, dispersants, protectants, biocides, thickeners or adjuvants may be added to the inoculum unit.

### 3. Method of use of the inoculum unit

According to a further aspect of the present disclosure, a method for biologically controlling ARD is provided. The method comprises the step of colonizing a woody plant (and in some embodiments the roots of the woody plant, which can be, in further embodiments the roots of recently cut stumps of a woody plant) with an effective amount of at least one strain of *Hypholoma* spp. of the present disclosure. The application of at least one strain of fungus, as such or in the form of suitable culture (e.g. in the form of an inoculum unit), can be effected on roots at the base of stumps the woody plants. More particularly, the method for biologically controlling ARD of woody plants in forests (as,for example, managed forests), plantations or orchards comprises the step of applying to the roots and stumps of the woody plants an amount of at least one strain of *Hypholoma* or a culture of *Hypholoma* or a carrier, delivery medium or substrate comprising said culture (i.e. an inoculum unit in a solid or liquid form) to successfully and quickly colonize the stump and roots. In an embodiment, the method comprises applying the *Hypholoma* cultures (such as the inoculum units) to recently cut woody plants. As used herein, the term "recently cut stump" refers to a stump that has not yet been colonized by other opportunistic organisms (for example other wood decay fungi or insect larvae) that might prevent or reduce colonization of the roots and stumps by the biocontrol fungus, i.e. by a strain of *Hypholoma.* Most preferably, a recently cut stump consists of a stump cut up to 18 months or less before the application of the composition of the present disclosure onto such cut stump. In another embodiment, the method comprises applying the *Hypholoma* cultures (such as the inoculum units) to cut woody plants which are known of being infected by *Armarilla* or are susceptible of being infected by *Armarilla.*

More particularly, methods of use of the present disclosure are those in which the fungus is provided with an opportunity to contact the roots of the woody plants or stumps either directly or indirectly by application to the target roots such that contact is made after the growth of its mycelium. For example, an inoculum unit of the present disclosure may be applied by burying said inoculation unit in a shallow hole excavated immediately next to one or more major roots of the recently cut stump.

It is appreciated that the compositions of the present disclosure are particularly suited for the reduction of *Armillaria* inoculum in a natural or managed forest, plantation or orchard and thus may be useful for protecting woody plants from ARD.

The inoculum unit and the isolated cultures of the present disclosure can have, under specific conditions, the ability to internally colonize or invade and establish within woody root tissues. For example, a dose of at least 10⁵, 10⁶, 10⁷, 10⁸, 10⁹ or 10¹⁰ colony forming units of *Hypholoma* sp. can be provided to internally colonize or invade and establish within woody root tissues. The internal colonization or establishement within woody root tissues can be observed at least 10, 20, 30, 40, 50 days or more after the application of the dose of the inoculum or the isolated cultures to the woody plants (for example to one or more roots of the woody plant).

The word "comprising" in the claims may be replaced by "consisting essentially of" or with "consisting of," according to standard practice in patent law.

The following example serves to further describe and define the invention, and is not intended to limit the invention in any way.

### EXAMPLES

### Strains included in the Examples:

Strains of three *Hypholoma* species were acquired from the culture collection of the USDA-Forest Service's Centre for Forest Mycology Research (Wood Products Laboratory in Madison, Wisconsin), Ontario Ministry of Natural Resources (OMNR), and Lallemand's field collections. The putative species of each *Hypholoma* strain was confirmed or corrected through PCR and sequencing of the ITS region and a BLAST search of sequence data in GenBank (Table 1).

**Table 1. Fungal strains included in biocontrol experiments.**

| Scientific Name | Collection Number | Year | Region | Collector | Substrate/ Host | **DNA** sequence results |
|---|---|---|---|---|---|---|
| *Hypholoma fasciculare* (Fr.) P. Kumm. | OKM-2932-T (USDA) | 1964 | ID, USA | O.K. Miller, Jr. | *Acer glabrum* var. *douglasii* stump | *Hypholoma fasciculare* |
| *Hypholoma fasciculare* (Fr.) P. Kumm. | OKM-7107-Sp (USDA) | 1968 | MD, USA | O.K. Miller, Jr. | *Vaccinium* roots and dead sticks | *Hypholoma fasciculare* |
| *Hypholoma fasciculare* (Fr.) P. Kumm. | RLG-11562-Sp (USDA) | 1976 | AR, USA | R.L. Gilbertson | *Pinus ponderosa* | *Hypholoma fasciculare* |
| *Hypholoma fasciculare* (Fr.) P. Kumm. | RLG-12668-Sp (USDA) | 1980 | AR, USA | R.L. Gilbertson | *Platanus wrightii* | *Hypholoma fasciculare* |
| *Hypholoma* sp. *fasciculare* | HHB-14801-Sp (USDA) | 1992 | WA, USA | H.H. Burdsall, Jr. | | *Hypholoma fasciculare* |
| *Hypholoma fasciculare* (Fr.) P. Kumm. | JPL-62-Sp (USDA) | 1972 | AR, USA | J. Lindsey | *Quercus hypoleucoi des* & Q. *reticulata* | *Hypholoma fasciculare* |
| *Hypholoma* sp. *fasciculare* | FP-133566-Sp (USDA) | 1973 | OR, USA | M.J. Larsen | *Alnus* | *Hypholoma fasciculare* |
| *Hypholoma fasciculare* (Fr.) P. Kumm. | H. fa Pinnel-B DSM 32925 | 2016 | Williams Lake, BC | Bill Chapman | *Pseudotsug a menziesii* stump | *Hypholoma fasciculare* |
| *Hypholoma sublateritium* | OKM-6192-Sp (USDA) | 1967 | VI, USA | L. Stewart; ID, O.K. Miller Jr. | | *Hypholoma sublateritium* |
| *Hypholoma sublateritium* | HHB-11948-Sp (USDA) | 1986 | MI, USA | H.H. Burdsall, Jr. | Acer stump | *Hypholoma sublateritium* |
| *Hypholoma sublateritium* (Schaeff.) Quél. | 49-1107 (USDA) | | NH, USA | | | *Hypholoma sublateritium* |
| *Hypholoma sublateritium* (Schaeff.) Quél. | FP-90085-Sp (USDA) | 1960 | NY, USA | R.W. Davidson | Logs, old, base of stump | *Hypholoma sublateritium* |
| *Hypholoma sublateritium* (Schaeff.) Quél. | OKM-6947-Sp (USDA) | 1968 | MD, USA | O.K. Miller, Jr. | Wood, buried | *Hypholoma sublateritium* |
| *Hypholoma capnoides* (Fr.) P. Kumm. | OKM-1523-T (USDA) | 1962 | ID, USA | O.K. Miller, Jr. | Stump base | *Hypholoma capnoides* |
| *Hypholoma capnoides* (Fr.) P. Kumm. | TAK02 DSM 33061 | 2016 | Simcoe Co., ON | Terry Kirk | *Pinus resinosa* stump | *Hypholoma capnoides* |
| *Hypholoma capnoides* (Fr.) P. Kumm. | TAK05 DSM 33078 | 2016 | Simcoe Co., ON | Terry Kirk | *Pinus resinosa* stump | *Hypholoma capnoides* |
| *Hypholoma capnoides* (Fr.) P. Kumm. | TAK06 (Lallemand) | 2016 | Simcoe Co., ON | Terry Kirk | *Pinus resinosa* stump | *Hypholoma capnoides* |
| *Hypholoma capnoides* (Fr.) P. Kumm. | SSM-Hc (Lallemand) | 2016 | Sault Ste. Marie, ON | Sylvia Greifenhage n | mushroom in *Pinus resinosa* plantation | *Hypholoma capnoides* |
| *Armillaria ostoyae* | B249-28 (high virulence) (OMNR) | 2004 | Simcoe Co., ON | J.A. McLaughlin | *Pinus resinosa* | *Armillaria ostoyae* |
| *Armillaria ostoyae* | P162-7 (low virulence) (OMNR) | 2004 | Simcoe Co., ON | J.A. McLaughlin | *Pinus resinosa* | *Armillaria ostoyae* |

**Example 1:** Growth rates of strains of *Hypholoma fasciculare, H. capnoides*, and H. *sublateritium,* at 15°C.

In this Example, it was to determine the variability in growth rate of the candidate strains, in particular at 15°C (below-ground temperature).

### Methods:

Growth rate was measured in two ways: as *in vitro* radial growth and mycelial dry-weight, on two media types, 2% malt agar (MA) and on a pine-wood infusion medium (PWI).

*Radial growth*. Plates (three replicates of each strain) were inoculated with 7 mm plugs placed at the edge of the plates and incubated in the dark at 15°C, a temperature chosen to simulate the cooler below-ground conditions (Dowson *et al.* 1989; Cox & Scherm 2006). The linear growth was measured along three lines (approximately 20° apart) radiating from the inoculum plug, every 24-hours starting from day 5 (to allow an establishment period) and the study was terminated when the first *Hypholoma* strain reached the opposite side of the plate on both media.

*Mycelial dry-weight.* The mycelium dry-weight produced by each strain was determined after the linear growth study was terminated, according to the following procedures:
1. The contents of each plate were transferred to a beaker containing 200ml of deionized water.
2. The beaker and contents were autoclaved at 121°C for 15 minutes to melt the agar.
3. The resulting mycelial mass and solution were filtered through a Whatman #1 filter paper (which had been pre-dried and weighed) under vacuum to remove the liquid.
4. The mycelium and filter paper were dried at 50°C for 48 hrs and weighed.
5. The mycelial dry-weight was calculated as the difference between the paper + mycelium weight and the weight of the paper alone, determined earlier.

*Statistical analysis.* Continuous data of the radial growth and mycelial dry-weight were normal and thus analyzed using a One-way ANOVA followed by mean separation and multiple comparisons according to the Tukey-Kramer method (α=0.05).

### Results:

*Radial growth*. Radial growth of all strains of *Hypholoma* and *A. ostoyae* was more rapid on the PWI medium than on 2% MA, with the fastest growing strain reaching the far side of the plate after 30 days and 36 days, respectively. Growth rates among strains were significantly different on both PWI and 2% MA, with *H. fasciculara* Pinnel-B the first to reach the limits of the plate on both media (Tables 2 and 3). Further, *H. fasciculara* Pinnel-B grew significantly more quickly than the benchmark strain, *H. fasciculara* OKM-7107-Sp (Tables 2 and 3), reaching the far side of the plate before *H. fasciculara* OKM-7107-Sp had reached the midpoint. In addition, the radial growth rate of *H. fasciculara* Pinnel-B significantly exceeded that of the two strains of *A. ostoyae* (Tables 2 and 3). Similarly, *H. capnoides* TAK02 and TAK05 grew significantly more quickly than the benchmark strain, *H. capnoides* OKM-1523-T.

**Table 2. Radial growth of Hypholoma strains and Armillaria ostoyae on Pine Wood Infusion medium after 30 days [(F(17,36) = 262; p<0.0001].**

| **Strain** | **Comparison of Means** | | | | | | | | | **Avg. (mm)** |
|---|---|---|---|---|---|---|---|---|---|---|
| **H. fa Pinnel-B** | A | | | | | | | | | 67.8 |
| H. ca TAK 02 | A | | | | | | | | | 67.4 |
| H. ca TAK 05 | A | | | | | | | | | 65.8 |
| H. sub OKM-6192-Sp | A | B | | | | | | | | 63.9 |
| H. sub FP-90085-Sp | A | B | | | | | | | | 63.4 |
| H. sub HHB-11948-Sp | A | B | | | | | | | | 63.3 |
| H. fa HHB-14801-Sp | | B | C | | | | | | | 58.8 |
| H. fa OKM-2932-T | | | C | D | | | | | | 56.7 |
| H. fa JPL-62-Sp | | | | D | E | | | | | 51.2 |
| H. fa RLG-12668-Sp | | | | | E | | | | | 49.9 |
| H. ca OKM-1523-T | | | | | | F | | | | 43.4 |
| H. sub OKM-6947-Sp | | | | | | F | | | | 43.0 |
| H. fa RLG-11562-Sp | | | | | | F | | | | 42.3 |
| **H. fa OKM-7107-Sp** | | | | | | | G | | | 30.8 |
| H. sub 49-1107 | | | | | | | G | H | | 24.6 |
| H. fa FP-133566-Sp | | | | | | | | H | | 21.7 |
| A. *ostoyae* B249-28 | | | | | | | | | I | 13.7 |
| A. *ostoyae* P162-7 | | | | | | | | | I | 11.0 |

**Table 3. Radial growth of Hypholoma strains and Armillaria ostoyae on 2% Malt Agar medium after 36 days [F(17.36) = 85.5; p<0.0001].**

| **Strain** | **Comparison of Means** | | | | | | | | | | **Avg. (mm)** |
|---|---|---|---|---|---|---|---|---|---|---|---|
| **H. fa Pinnel-B** | A | | | | | | | | | | 69.2 |
| H. fa HHB-14801-Sp | A | B | | | | | | | | | 61.8 |
| H. fa JPL-62-Sp | | B | C | | | | | | | | 54.8 |
| H. sub OKM-6192-Sp | | | C | D | | | | | | | 44.9 |
| H. fa OKM-2932-T | | | C | D | | | | | | | 44.8 |
| H. sub FP-90085-Sp | | | | D | | | | | | | 44.0 |
| H. fa RLG-12668-Sp | | | | D | | | | | | | 42.8 |
| H. sub OKM-6947-Sp | | | | | E | | | | | | 32.2 |
| H. sub HHB-11948-Sp | | | | | E | | | | | | 32.1 |
| H. ca TAK 05 | | | | | E | F | | | | | 30.7 |
| H. ca TAK 02 | | | | | E | F | G | | | | 29.1 |
| **H. fa OKM-7107-Sp** | | | | | E | F | G | H | | | 24.2 |
| H. ca OKM-1523-T | | | | | | F | G | H | I | | 21.7 |
| H. sub 49-1107 | | | | | | | G | H | I | J | 19.8 |
| *A*. *ostoyae* B249-28 | | | | | | | | H | I | J | 15.1 |
| H. fa FP-133566-Sp | | | | | | | | | I | J | 13.7 |
| *A*. *ostoyae* P162-7 | | | | | | | | | I | J | 11.8 |
| H. fa RLG-11562-Sp | | | | | | | | | | J | 10.1 |

*Mycelial dry-weight.* The production of mycelial mass was far less (by a log) on PWI than on 2% MA (compare Tables 4 and 5). On both media types, *H. fasciculare* Pinnel-B was among the top producers of mycelial mass, producing significantly more mycelial mass than both H. *fasciculara* OKM-7107-Sp and the two strains of *A. ostoyae* (Tables 4 and 5).

**Table 4. Mycelial dry-weight growth of Hypholoma strains and Armillaria ostoyae on Pine Wood Infusion medium after 30 days [F(17,36) = 10.5; p<0.0001].**

| **Strain** | **Comparison of Means** | | | | | | **Avg. (mg)** |
|---|---|---|---|---|---|---|---|
| H. fa HHB-14801-Sp | A | | | | | | 4.5 |
| **H. fa Pinnel-B** | A | B | | | | | 3.6 |
| H. ca TAK 05 | A | B | | | | | 3.5 |
| H. fa RLG-11562-Sp | A | B | C | | | | 3.1 |
| H. ca OKM-1523-T | | B | C | D | | | 2.8 |
| H. sub HHB-11948-Sp | | B | C | D | | | 2.8 |
| H. fa OKM-2932-T | | B | C | D | E | | 2.7 |
| H. sub FP-90085-Sp | | B | C | D | E | | 2.6 |
| H. sub OKM-6192-Sp | | B | C | D | E | | 2.5 |
| H. fa JPL-62-Sp | | B | C | D | E | F | 2.1 |
| **H. fa OKM-7107-Sp** | | B | C | D | E | F | 2.1 |
| H. fa FP-133566-Sp | | | C | D | E | F | 1.8 |
| *A*. *ostoyae* P162-7 | | | C | D | E | F | 1.77 |
| *A*. *ostoyae* B249-28 | | | C | D | E | F | 1.7 |
| H. ca TAK 02 | | | | D | E | F | 1.5 |
| H. sub 49-1107 | | | | D | E | F | 1.3 |
| H. sub OKM-6947-Sp | | | | | E | F | 1.2 |
| H. fa RLG-12668-Sp | | | | | | F | 0.8 |

**Table 5. Mycelial dry-weight growth of Hypholoma strains & Armillaria ostoyae on 2% MA medium after 30 days [F(17,36) = 35.3; p<0.0001].**

| **Strain** | **Comparison of Means** | | | | | | | **Avg. (mg)** |
|---|---|---|---|---|---|---|---|---|
| H. fa HHB-14801-Sp | A | | | | | | | 45.7 |
| H. sub FP-90085-Sp | A | B | | | | | | 42.3 |
| **H. fa Pinnel-B** | A | B | | | | | | 39.8 |
| H. sub OKM-6192-Sp | A | B | C | | | | | 35.0 |
| H. fa OKM-2932-T | B | C | D | | | | | 32.7 |
| H. fa JPL-62-Sp | B | C | D | | | | | 32.7 |
| H. sub OKM-6947-Sp | | C | D | E | | | | 26.0 |
| *A*. *ostoyae* B249-28 | | C | D | E | | | | 25.0 |
| H. fa RLG-12668-Sp | | | D | E | F | | | 22.1 |
| **H. fa OKM-7107-Sp** | | | | E | F | | | 20.8 |
| H. sub HHB-11948-Sp | | | | E | F | G | | 18.6 |
| H. ca OKM-1523-T | | | | E | F | G | H | 15.7 |
| H. ca TAK 05 | | | | | F | G | H | 11.5 |
| H. sub 49-1107 | | | | | F | G | H | 11.2 |
| H. fa RLG-11562-Sp | | | | | F | G | H | 11.0 |
| H. ca TAK 02 | | | | | | G | H | 7.7 |
| H. fa FP-133566-Sp | | | | | | G | H | 7.5 |
| *A*. *ostoyae* P162-7 | | | | | | | H | 4.6 |

### Conclusion:

Results have demonstrated that *H. fasciculare* Pinnel-B exhibited superior growth and exceeding the performance of the benchmark strain, *H. fasciculare* OKM-7107-Sp, which in some cases did not perform significantly greater than the *A. ostoyae* strains. Therefore, the results of these experiments have demonstrated that *H. fasciculare* Pinnel-B is a superior biocontrol strain of *A. ostoyae* while *H. fasciculara* OKM-7107-Sp falls short.

**Example 2:** *In vitro* pairings of candidate biological control strains versus a low-virulence (P162-7) and high-virulence (B249-28) strain of *A. ostoyae.*

In this Example, the competitive and/or antagonistic interactions between the *Hypholoma* strains and *A. ostoyae* were assessed.

### Methods:

*Growth suppression.* To assess the ability of the biocontrol strains to suppress the growth of strains of *A. ostoyae,* 7-mm-diameter mycelium/agar plugs were cut from the advancing margin of actively growing cultures of the test strains and were plated about 4 cm apart on 2% MA and PWI. Because of its relative slow growth rate at the incubation temperature of 15°C, the *Armillaria* isolates were allowed to grow alone for 3 weeks before the *Hypholoma* was added. Each pairing (i.e. biocontrol strain of *Hypholoma* against the target strain of *A. ostoyae*) was replicated 3 times and solo growth of the *A. ostoyae* strains was also recorded, as a benchmark to which the suppressed growth could be compared.

*Interactions between biocontrol strains and A. ostoyae.* In a second component of this study, interactions between strains of *Hypholoma* spp. and the low-virulence (P162-7) and high-virulence (B249-28) strains of *Armillaria* on PWI and 2% MA media were scored according to the degree of antagonism exhibited by the *Hypholoma* strain towards the *Armillaria,* based on the categories of Porter (1924): mutual intermingling of both species - 1 point; slight mutual inhibition (narrow gap between advancing fronts) - 2 points; growth of *Hypholoma* around the *Armillaria* (containment) - 3 point; and growth of *Hypholoma* over the *Armillaria* (predation) - 4 points.

*Statistical analysis.* Growth rate data for the two *A. ostoyae* strains and the interaction types were tested for Normality and transformed (log-transformation) as necessary, then analyzed by One-way ANOVA followed by mean separation and multiple comparisons according to the Tukey-Kramer method (α=0.05).

### Results:

*Growth suppression.* The growth rates of both strains of *A. ostoyae* differed significantly among the pairings with the biocontrol strains (Tables 6 to 9). As can also be seen in Tables 6 - 9, *H. fasciculare* Pinnel-B was significantly more effective at suppressing the growth of the *A. ostoyae* strains than was *H. fasciculara* OKM-7107-Sp, which did not suppress growth of either strains of *A. ostoyae* on the PWI medium.

**Table 6. Radial growth of the low-virulence (P162-7) strain of A. ostoyae on PWI when paired with biocontrol candidate strains, after 45 days [F(18,38) = 5.49; p<0.0001].**

| **Strain** | **Comparison of Means** | | | | | | | **Avg. (mm)** |
|---|---|---|---|---|---|---|---|---|
| A. ostoyae P162-7 | A | | | | | | | 23.0 |
| vs H. fa RLG-11562-Sp | A | B | | | | | | 20.3 |
| vs **H. fa OKM-7107-Sp** | A | B | C | | | | | 18.7 |
| vs H. fa JPL-62-Sp | | B | C | D | | | | 16.1 |
| vs H. fa FP-133566-Sp | | | C | D | | | | 15.9 |
| vs H. ca OKM-1523-T | | | C | D | | | | 15.8 |
| vs H. ca TAK-05 | | | C | D | E | | | 15.6 |
| vs H. ca TAK-02 | | | C | D | E | | | 15.3 |
| vs H. sub FP-90085-Sp | | | C | D | E | F | | 15.1 |
| vs H. ca TAK 06 | | | C | D | E | F | | 14.9 |
| vs H. sub OKM-6192-Sp | | | C | D | E | F | | 14.6 |
| vs H. sub 49-1107 | | | | D | E | F | | 13.6 |
| vs H. fa OKM-2932-T | | | | D | E | F | | 12.3 |
| vs H. sub OKM-6947-Sp | | | | D | E | F | | 12.1 |
| vs H. fa RLG-12668-Sp | | | | D | E | F | | 12.0 |
| vs H. ca SSM | | | | D | E | F | | 12.0 |
| vs H. sub HHB-11948-Sp | | | | D | E | F | | 11.8 |
| vs H. fa HHB-14801-Sp | | | | | E | F | | 11.3 |
| vs **H. fa Pinnel-B** | | | | | | F | | 10.8 |

**Table 7. Radial growth of the low-virulence (P162-7) strain of A. ostoyae on 2% MA when paired with biocontrol candidate strains, after 45 days [F(18,38) = 11.62; p<0.0001].**

| **Strain** | **Comparison of Means** | | | | | | | **Avg. (mm)** |
|---|---|---|---|---|---|---|---|---|
| A. ostoyae P162-7 | A | | | | | | | 26.3 |
| vs H. fa JPL-62-Sp | | B | | | | | | 19.0 |
| vs **H. fa OKM-7107-Sp** | | B | C | | | | | 18.8 |
| vs H. fa RLG-11562-Sp | | B | C | D | | | | 17.4 |
| vs H. fa RLG-12668-Sp | | B | C | D | E | | | 16.3 |
| vs H. fa OKM-2932-T | | B | C | D | E | | | 16.2 |
| vs H. ca TAK 06 | | B | C | D | E | | | 15.8 |
| vs H. ca TAK-02 | | B | C | D | E | | | 15.3 |
| vs H. ca TAK-05 | | B | C | D | E | | | 15.2 |
| vs H. sub OKM-6192-Sp | | B | C | D | E | | | 15.2 |
| vs H. ca SSM | | B | C | D | E | | | 15.0 |
| vs H. sub OKM-6947-Sp | | B | C | D | E | | | 15.0 |
| vs H. sub FP-90085-Sp | | B | C | D | E | | | 14.8 |
| vs H. sub 49-1107 | | B | C | D | E | | | 14.6 |
| vs H. fa HHB-14801-Sp | | B | C | D | E | | | 14.3 |
| vs H. sub HHB-11948-Sp | | | C | D | E | | | 14.1 |
| vs H. fa FP-133566-Sp | | | | D | E | | | 13.9 |
| vs H. ca OKM-1523-T | | | | D | E | | | 13.2 |
| vs **H. fa Pinnel-B** | | | | | E | | | 12.1 |

**Table 8. Radial growth of the high-virulence (B249-28) strain of A. ostoyae on PWI when paired with biocontrol candidate strains, after 45 days [F(18,38) = 6.91; p<0.0001].**

| **Strain** | **Comparison of Means** | | | | | | | **Avg. (mm)** |
|---|---|---|---|---|---|---|---|---|
| A. ostoyae B249-28 | A | | | | | | | 18.8 |
| vs H. ca OKM-1523-T | A | B | | | | | | 14.9 |
| vs H. fa FP-133566-Sp | A | B | C | | | | | 14.7 |
| vs **H. fa OKM-7107-Sp** | A | B | C | D | | | | 14.4 |
| vs H. fa JPL-62-Sp | | B | C | D | E | | | 13.0 |
| vs H. sub HHB-11948-Sp | | B | C | D | E | | | 12.6 |
| vs H. ca TAK 06 | | B | C | D | E | | | 12.3 |
| vs H. sub 49-1107 | | B | C | D | E | | | 12.3 |
| vs H. fa RLG-11562-Sp | | B | C | D | E | | | 11.6 |
| vs H. fa HHB-14801-Sp | | B | C | D | E | | | 11.1 |
| vs H. fa RLG-12668-Sp | | B | C | D | E | | | 11.0 |
| vs H. ca TAK-02 | | B | C | D | E | | | 10.9 |
| vs H. sub FP-90085-Sp | | B | C | D | E | | | 10.8 |
| vs H. sub OKM-6192-Sp | | B | C | D | E | | | 10.1 |
| vs H. ca SSM | | | C | D | E | | | 9.9 |
| vs H. sub OKM-6947-Sp | | | C | D | E | | | 9.8 |
| vs H. fa OKM-2932-T | | | | D | E | | | 9.6 |
| **vs H. fa Pinnel-B** | | | | | E | | | 9.4 |
| vs H. ca TAK-05 | | | | | E | | | 9.0 |

**Table 9. Radial growth of the high-virulence (B249-28) strain of A. ostoyae on 2% MA when paired with biocontrol candidate strains, after 45 days [F(18,38) = 14.23; p<0.0001].**

| **Strain** | **Comparison of Means** | | | | | | | **Avg. (mm)** |
|---|---|---|---|---|---|---|---|---|
| A. ostoyae B249-28 | A | | | | | | | 25.9 |
| vs H. fa JPL-62-Sp | | B | | | | | | 19.6 |
| vs H. fa FP-133566-Sp | | B | | | | | | 19.4 |
| **vs H. fa OKM-7107-Sp** | | B | C | | | | | 18.9 |
| vs H. sub OKM-6192-Sp | | B | C | | | | | 18.7 |
| vs H. ca OKM-1523-T | | B | C | | | | | 18.6 |
| vs H. ca TAK 06 | | B | C | | | | | 17.6 |
| vs H. sub OKM-6947-Sp | | B | C | | | | | 17.3 |
| vs H. ca TAK-02 | | B | C | | | | | 17.0 |
| vs H. fa RLG-12668-Sp | | B | C | D | | | | 16.9 |
| vs H. ca TAK-05 | | B | C | D | | | | 16.3 |
| vs H. fa HHB-14801-Sp | | B | C | D | | | | 16.2 |
| vs H. fa RLG-11562-Sp | | B | C | D | E | | | 15.9 |
| vs H. ca SSM | | B | C | D | E | | | 15.4 |
| vs H. sub 49-1107 | | B | C | D | E | | | 14.9 |
| vs H. sub HHB-11948-Sp | | | C | D | E | | | 14.1 |
| vs H. fa OKM-2932-T | | | C | D | E | | | 14.0 |
| vs H. sub FP-90085-Sp | | | | D | E | | | 11.9 |
| **vs H. fa Pinnel-B** | | | | | E | | | 10.8 |

*Interactions between biocontrol strains and A. ostoyae.* A range of interaction types (Porter, 1924) between the biocontrol candidates and the two strains of *A. ostoyae* were observed (Table 10). *H. fasciculare* Pinnel-B was one of three strains of *H. fasciculare* that totally overgrew both strains of *A. ostoyae* in all pairings. Results were less consistent for other strains, with different interaction behaviour observed among replications. Approximately half (52.2%) of the interactions were scored as type 3, growth around the *Armillaria* culture (containment) (data not shown). The benchmark strain *H. fasciculare* OKM-7107-Sp did not overgrow the *Armillaria* cultures in any of the replications and in 67% of the replications either exhibited mutual inhibition with the *Armillaria* or intermingled hyphal growth without noticeable effect on either strain (data not shown).

**Table 10. Interactions between biocontrol candidate strains and a high-virulence (B249-28) and low-virulence (P162-7) strain of A. ostoyae when paired in vitro, on two media (Pine Wood Infusion and 2% Malt Agar) after 45 days [F(17,199) = 30.4; p<0.0001]. (Scoring adapted from Porter (1924): mutual intermingling of both species - 1 point; slight mutual inhibition (narrow gap between advancing fronts) - 2 points; growth of Hypholoma around the Armillaria (containment) - 3 point; and growth of Hypholoma over the Armillaria (predation) - 4 points.)**

| **Strain** | **Comparison of Means** | | | | | | | **Mean Interaction Score** |
|---|---|---|---|---|---|---|---|---|
| **H. fa Pinnel-B** | A | | | | | | | 4.00 |
| H. fa OKM-2932-T | A | | | | | | | 4.00 |
| H. fa RLG-12668-Sp | A | | | | | | | 4.00 |
| H. fa HHB-14801-Sp | A | | | | | | | 3.91 |
| H. sub HHB-11948-Sp | A | B | | | | | | 3.88 |
| H. sub FP-90085-Sp | A | B | C | | | | | 3.50 |
| H. sub OKM-6192-Sp | A | B | C | | | | | 3.46 |
| H. sub OKM-6947-Sp | A | B | C | | | | | 3.42 |
| H. ca TAK-05 | | B | C | D | | | | 3.25 |
| H. fa JPL-62-Sp | | | C | D | | | | 3.17 |
| H. ca SSM | | | C | D | | | | 3.00 |
| H. ca TAK-02 | | | C | D | | | | 3.00 |
| H. fa RLG-11562-Sp | | | C | D | | | | 3.00 |
| H. sub 49-1107 | | | C | D | | | | 3.00 |
| H. ca TAK 06 | | | | D | E | | | 2.67 |
| **H. fa OKM-7107-Sp** | | | | | E | F | | 2.08 |
| H. ca OKM-1523-T | | | | | | F | G | 2.00 |
| H. fa FP-133566-Sp | | | | | | | G | 1.42 |

### Conclusion:

Strain *H. fasciculare* Pinnel-B significantly reduced the growth rate of both strains of *A. ostoyae* on both media types. In addition, *H. fasciculare* Pinnel-B exhibited predatory behaviour towards *A. ostoyae,* completely overgrowing the *A. ostoyae* cultures. In contrast, *H. fasciculare* OKM-7107-Sp did not consistently suppress the growth of the *Armillaria* strains and in its interactions with *A. ostoyae* did not exhibit combative behaviour, at best achieving a "truce" with the advancing *Armillaria* mycelium, in the form of a narrow zone of inhibition where hyphae of each culture were excluded. *H. capnoides* TAK02 and TAK05 demonstrated a good efficiency to reduce the growth rate of strains *A. ostoyae* in comparison to *H. capnoides* OKM-1523-T.

**Example 3:** Foraging/Eradication - Inoculated disc pairing and incubation, followed by assessment of the foraging ability of the biocontrol strains and their ability to replace A. *ostoyae* in root discs already colonized by *A. ostoyae.*

In this Example, it was determined if *H. fasciculare* Pinnel-B and *H. capnoides* TAK02 and TAK05 could successfully seek out (foraging behaviour) root discs colonized by *A. ostoyae* and replace it (eradication) in root tissues it previously occupied.

### Methods:

*Preparation of root discs and initiation of the study.* One-cm-thick root discs were cut from root lengths collected from freshly felled red pine. The root discs were placed in flasks or bottles containing 2% malt extract solution and autoclaved for one hour, after which the malt extract solution was poured off and cultures of the test strains (described in Table 1) were cut into small cubes and mixed into the flasks and bottles of discs. The bottles and flasks were incubated at 25°C in the dark until the root discs were thoroughly colonized.

Similar sized colonized discs of *A. ostoyae* strain Ao B249-28 (high-virulence) and a candidate biocontrol strain were placed on opposite sides of deep Petri plates containing damp sand which had been sterilized by autoclaving. Self-paired (e.g. *H. fasciculare* Pinnel-B vs *H. fasciculare* Pinnel-B) replicates were also included to act as controls to assess foraging behaviour. The plates were sealed with Parafilm^{™} and incubated in the dark at 15°C. Pairings with the biocontrol strains versus *A. ostoyae* were replicated six times while, self-pairings were replicated three times.

*Foraging an overgrowth of Armillaria discs.* The six replicated pairings were inspected periodically over 45 days, at which times the percent of overgrowth of the *Armillaria* discs by the *Hypholoma* strains which had successfully foraged and discovered the *Armillaria* discs was estimated and recorded.

*Assessment of replacement of Armillaria.* Destructive sampling of *Armillaria* discs was conducted on five of the six replicates 9.5-10.5 months after plating. Wood samples were taken from the inner bark, sapwood and pith of the *Armillaria* discs and plated on 3% MA with and without 30 ml/L ethanol. Addition of ethanol encourages *Armillaria* growth while inhibiting *Hypholoma,* thus reducing the likelihood of committing a Type 1 Error when assessing the hypothesis that *Hypholoma* can replace *Armillaria.* A scoring system was devised to reflect the ability of the test strains to replace *Armillaria* from the sapwood and pith of the Armillaria-colonized root discs. Isolation of *Hypholoma* from the inner bark scored 2 points, the sapwood of the *Armillaria* disc scored 4 points, and from the pith area, 6 points. Isolations from the sapwood area scored lower because sapwood tissue contains more easily obtainable nutrients than does heartwood, and in a conifer species, less resin, and is therefore easier to colonize by wood decay fungi (Anon. 1966). Samples that yielded both species scored one point less, (e.g. both *Hypholoma* and *Armillaria* isolated from sapwood scored 3 points). Isolation scores from three portions of the discs were totalled and the final score for the strain was calculated as the average score of all six replicates. Because all strains that successfully foraged and overgrew the bark of the *Armillaria* discs exhibited a high degree of success in replacing it, the subsequent analysis was conducted on a data set comprising only the replacement scores from the sapwood and pith regions of the discs.

*Statistical analysis.* The data from the first component of the study (foraging and overgrowth) included many 0% and 100% values. These data were first transformed as follows: "0"% values were transformed according to the formula 1/4n, where n=6 reps, to become 1.5, and "100"% values were transformed by 100-1/4n = 98.5. The data set was then arcsin transformed to normalize the data set and then the transformed data were analyzed by One-way ANOVA followed by mean separation and multiple comparisons according to the Student's t method (α=0.05). The data from the second component of the study (replacement) was tested for Normality and log transformed before being analyzed by One-way ANOVA followed by mean separation and multiple comparisons according to the Tukey-Kramer method (α=0.05).

### Results:

*Foraging and overgrowth of Armillaria discs.* The biocontrol strains varied significantly in their ability to forage for, and overgrow, the *Armillaria* root discs [F(15,80) = 9.19; p<0.0001] (Table 11). Within days *H. fasciculare* Pinnel-B, and some *Hypholoma* strains, began to produce rapidly growing foraging hyphal cords while others produced hyphal cords that were not as fast-growing or prolific. Growth of foraging hyphal cords appeared to be stimulated by the presence of root discs colonized by *Armillaria.* Self-pairing of prolific growers such as H. *fasciculare* Pinnel-B did not produce foraging growth. After 45 days, eight of the strains had successfully foraged and to some degree overgrown the *Armillaria* discs (Table 11), however, three strains, among them *H. fasciculare* OKM-7107-Sp, never produced such hyphal cords throughout the entire duration of the experiment.

**Table 11. Comparison of the ability of the biocontrol test strains of Hypholoma spp. to forage for, and overgrow, root discs colonized by A. ostoyae after 45 days, [F(15,80) = 9.19; p<0.0001].**

| **Strain** | **Comparison of means** | | | **Mean % overgowth** |
|---|---|---|---|---|
| **H. fa Pinnel-B** | A | | | 96.7 |
| H. fa OKM-2932-T | A | | | 91.7 |
| H. fa HHB-14801-Sp | A | B | | 75.0 |
| H. sub OKM-6192-Sp | A | B | | 68.3 |
| H. fa RLG-12668-Sp | A | B | | 66.7 |
| H. ca TAK 02 | | B | | 43.3 |
| H. sub FP-90085-Sp | | B | | 41.7 |
| H. sub HHB-11948-Sp | | B | C | 33.3 |
| H. sub OKM-6947-Sp | | | C | 0 |
| H. ca TAK 05 | | | C | 0 |
| H. fa FP-133566-Sp | | | C | 0 |
| H. fa JPL-62-Sp | | | C | 0 |
| H. fa RLG-11562-Sp | | | C | 0 |
| H. ca OKM-1523-T | | | C | 0 |
| **H. fa OKM-7107-Sp** | | | C | 0 |
| H. sub 49-1107 | | | C | 0 |

*Assessment of replacement of Armillaria.* The biocontrol test strains exhibited significant variation in their ability to replace *A. ostoyae* in the *Armillaria* discs [F(14, 60) = 10.24; p<0.0001]. When assessed 9.5-10.5 months after initiation of the study, three test strains of *Hypholoma,* one from each species type (H. ca OKM-1523-T, *H. fasciculare* OKM-7107-Sp and H. sub 49-1107) had not successfully foraged and replaced *Armillaria* in any of their five replications. Twelve test strains exhibited the ability to replace *A. ostoyae* in both the sapwood and the pith area of the root (Table 12). Results have clearly demonstrated that H. *fasciculare* Pinnel-B exhibited superior activity to replace *A. ostoyae* in both the sapwood and the pith area of the root.

**Table 12. Replacement of Armillaria ostoyae in root discs by foraging strains of Hypholoma species. [Full replacement from both sapwood (4 points for full replacement, 3 for partial replacement) and pith area (6 points for full replacement, 5 points for partial replacement) totals 10 points.]**

| **Strain** | **Comparison of means** | | | | **Mean replacement scores (x/10)** |
|---|---|---|---|---|---|
| **H. fa Pinnel-B** | A | | | | 9.0 |
| H. fa OKM-2932-T | A | | | | 8.4 |
| H. fa HHB-14801-Sp | A | | | | 7.8 |
| H. fa RLG-12668-Sp | A | B | | | 6.0 |
| H. sub HHB-11948-Sp | A | B | | | 5.8 |
| H. ca TAK 05 | A | B | C | | 5.0 |
| H. sub FP-90085-Sp | A | B | C | D | 4.8 |
| H. ca TAK 02 | A | B | C | D | 4.4 |
| H. sub OKM-6192-Sp | A | B | C | D | 4.0 |
| H. sub OKM-6947-Sp | B | C | D | E | 2.0 |
| H. fa JPL-62-Sp | | C | D | E | 1.6 |
| H. fa RLG-11562-Sp | | | D | E | 0.8 |
| H. ca OKM-1523-T | | | | E | 0 |
| **H. fa OKM-7107-Sp** | | | | E | 0 |
| H. sub 49-1107 | | | | E | 0 |

### Conclusion:

Although there have been earlier published reports (e.g. Chapman & Xiao 2000) of replacement of Armillaria in the bark of tree roots, this is the first study that demonstrates the ability of strains of *Hypholoma* species to invade woody root tissue and replace *Armillaria.* Strain *H. fasciculare* Pinnel-B very quickly began foraging and directed hyphal cords towards the root discs colonized by *A. ostoyae.* It overgrew these root discs and successfully invaded the bark, sapwood and pith area tissue where it either completely or partially replaced the *A. ostoyae* during the 9.5 - 10.5 month duration of the experiment.

The series of studies reported above provide evidence that the strain *H. fasciculare* Pinnel-B possesses a unique combination of abilities, not exceeded by any other tested strain, as a biocontrol agent against Armillaria Root Disease. As such, it has the potential to be a viable alternative to the current forest management options of stumping (Morrison *et al*. 1988) and converting stands to species that are more resistant to ARD (Shaw *et al*. 2012).

### REFERENCES

Anon. 1966. Differences between heartwood and sapwood. USDA-FS Res. Note FPL-0147. 2 p.

Boddy, L., 2000. Interspecific combative interactions between wood-decay basidiomycetes. FEMS Microbiol. Ecol. 31:185-194.

Boddy, L., Tordoff, G.M., Wood, J., Hynes, J., Bebber, D., Jones, T.H. and M.D. Fricker. 2006. Mycelial foraging strategies of saprotrophic cord-forming basidiomycetes. pp 13-20, in, Proceedings of the 8th International Mycological Congress.

Chapman, W. and G. Xiao. 2000. Inoculation of stumps with Hypholoma fasciculare as a possible means to control armillaria root disease. Can. J. Bot. 78:129-134.

Chapman, W., Xiao G. and S. Myers. 2004. Early results from field trials using Hypholoma fasciculare to reduce Armillaria ostoyae root disease. Can. J. Bot. 82: 962-969.

Cox, K.D. and H. Scherm. 2006. Interaction dynamics between saprobic lignicolous fungi and Armillaria in controlled environments: Exploring the potential for competitive exclusion of Armillaria on peach. Biological Control 37:291-300.

de Boer, W., Folman, L.B., Klein Gunnewiek, P.J.A., Svensson, T., Bastviken, D., Oberg, G., del Rio, J.C. and L. Boddy. 2010. Mechanism of antibacterial activity of the white-rot fungus Hypholoma fasciculare in colonizing wood. Can. J. Microbiol. 56:380-388.

Dowson, C.G., Boddy, L., Rayner, A.D.M., 1989. Development and extension of mycelial cords in soil at different temperature and moisture contents. Mycol. Res. 92, 383-391.

Guillaumin, J.-J., Mohammed, C., and S. Berthelay. 1989. Armillaria species in the northern temperate hemisphere. pp. 27-43, in Proceedings of the Seventh International Conference on Roots and Butt Rots. D.J. Morrison (ed.). Vernon and Victoria, British Columbia, Canada, August 1988. Pacific Forestry Centre, For. Canada, Victoria, BC.

Guillaumin J.-J., Mohammed C., Anselmi N., Courtecuisse R., Gregory S.C., Holdenrieder O., Intini M., Lung B., Marxmuller H., Morrison D., Rishbeth J., Termorshuizen A.J., Tirro A. & B. Van Dam. 1993. Geographical distribution and ecology of the Armillaria species in western Europe. Eur. J. For. Path. 23 (1993) 321-341.

Hood, I.A., Oliva, J., Kimberley, M.O., Arhipova, N., and R. Bakys. 2015. Armillaria novae-zelandiae and other basidiomycete wood decay fungi in New Zealand Pinus radiata thinning stumps. For. Pathol. 45:298-310.

Keča, N. 2009. In vitro interactions between Armillaria species and potential biocontrol fungi. University of Belgrade, Bulletin of the Faculty of Forestry 100:129-142.

Kile, G.A., McDonald, G.I., and Byler, J.W. 1991. Ecology and disease in natural forests. In Armillaria root disease. Edited by C.G. Shaw III and G.A. Kile. U.S. Dep. Agric. Agric. Handb. 691. pp. 102-121.

Lockman, I. B. and H.S.J. Kearns, eds. 2016. Forest root diseases across the United States. Gen. Tech. Rep. RMRS-GTR-342. Ogden, UT: USDA-For. Serv., Rocky Mountain Research Station. 55 p.

McLaughlin, J.A. 2001a. Distribution, hosts and site relationships of Armillaria spp. in central and southern Ontario. Can. J. For. Res. 31:1481-1490.

McLaughlin, J.A. 2001b. Impact of Armillaria root disease on succession in red pine plantations in southern Ontario. For. Chron. 77(3):519-524.

McLaughlin, J.A. 2008. The contributions of genotype and soil to variation in rhizomorph production of Armillaria ostoyae isolates from diseased and healthy red pine plantations. In Abiotic and biotic factors associated with pocket mortality of red pine (Pinus resinosa Ait.) in southern Ontario (Doctoral dissertation). U of Guelph.

McLaughlin, J.A., Hsiang, T., Halicki Hayden, G. and S. Greifenhagen. 2010. Mortality in southern Ontario red pine plantations: Causes, consequences, and management options. Research Note No. 69. Ont. For. Res. Inst., Ont. Min. Nat. Resour. 4 p.

McLaughlin, J.A., Hsiang, T., Halicki Hayden, G. and S. Greifenhagen. 2011. Abiotic and biotic factors used to assess decline risk in red pine (Pinus resinosa Ait.) plantations. For. Chron. 87(1):99-115.

Morrison, D.J., Wallis, G.W. and L.C Weir. 1988. Control of Armillaria and Phellinus root diseases in the southern interior of British Columbia. For. Can. Pac. For. Res. Cent. Info. Rep. BC-X-302. Victoria, B.C, Canada. 16 p.

Porter, C.L. 1924. Concerning the characters of certain fungi as inhibited by their growth in the presence of other fungi. American Journal of Botany 11:168-188.

Rayner, A.D.M. 1979. Internal spread of fungi inoculated into hardwood stumps. New Phytol 82:505-517.

Shaw III, C.G., Omdal, D.W., Ramsey-Kroll, A. and L.F. Roth. 2012. Inoculum reduction measures to manage Armillaria Root Disease in a severely infected stand of Ponderosa pine in South-Central Washington: 35-year results. West. J. Appl. For. 27(1):25-29.

Wargo, P.M. and Kile, G.A. 1992. Armillaria root disease. In Plant diseases of international importance. Vol. IV. Edited by A.N. Mukhopadhyay, J. Kumar, H.S. Chaube, and U.S. Singh. Prentice Hall, Englewood Cliffs, N.J. pp. 311-345.

Whitney, R.D., Ip, D.W. and R.W. Irwin. 1989. Armillaria infection in symptomless white spruce, black spruce and red pine saplings in Ontario plantations. pp. 546-549, in Proceedings of the Seventh International Conference on Root and Butt Rots. D.J. Morrison (ed.). Aug. 1988, Vernon and Victoria, B.C., For. Can., Pacific Forestry Centre, Victoria, B.C. 680.

## Claims

1. An isolated culture of:
- *Hypholoma fasiculare* (*H. fasiculare*), wherein the isolated culture comprises H. *fasiculare* strain Pinnel-B (DSM 32925);
- *Hypholoma capnoides* (*H. capnoides*), wherein the isolated culture comprises H. *capnoides* strain TAK02 (DSM 33061); or
- *Hypholoma capnoides* (*H. capnoides*), wherein the isolated culture comprises H. *capnoides* strain TAK05 (DSM 33078).

2. An inoculum unit comprising (i) an isolated culture of *Hypholoma fasiculare* strain Pinnel-B (DSM 32925), *Hypholoma capnoides* strain TAK02 (DSM 33061), *Hypholoma capnoides* strain TAK05 (DSM 33078) or a combination thereof and (ii) a delivering medium.

3. The inoculum unit of claim 2, wherein said delivering medium is in a solid form or a liquid form.

4. The inoculum unit of claim 3, wherein said delivering medium is in a solid form and comprises a solid substrate.

5. The inoculum unit of claim 4, wherein said solid substrate comprises wood, sawdust, wood chips, agricultural wastes, bran cereals, cellulose-containing substances or a mixture thereof.

6. A method for reducing an *Armillaria* population or for delaying or impeding the spread of an established *Armillaria* infection center in the soil, said method comprising contacting a woody plant with an inoculum unit comprising an isolated culture of *Hypholoma fasciculare (H. fasciculare), Hypholoma capnoides (H. capnoides), Hypholoma sublateritium* (H. *sublateritium*) or a combination thereof.

7. The method of claim 6, wherein said isolated culture of:
- *H. fasciculare* is *H. fasciculare* strain Pinnel-B (DSM 32925), *H. fasciculare* strain OKM-2932-T (USDA), *H. fasciculare* strain RLG-12668-Sp (USDA) or *H. fasciculare* HHB-14801-Sp (USDA);
- *H. sublateritium* is *H. sublateritium* HHB-11948-Sp (USDA), *H. sublateritium* FP-90085-Sp (USDA) or a combination thereof; or
- *H. capnoides* is *H. capnoides* TAK02 (DSM 33061), *H. capnoides* TAK05 (DSM 33078) or a combination thereof.

8. The method of claim 6 or 7, wherein said inoculum unit is in a solid form or in a liquid form.

9. The method of claim 8, wherein said inoculum unit is in a solid form and comprises a solid substrate.

10. The method of claim 9, wherein said solid substrate comprises wood, sawdust, wood chips, agricultural wastes, bran cereals, cellulose-containing substances or a mixture thereof, optionally wherein said solid substrate further comprises a source of nitrogen.

11. The method of claim 10, wherein said solid substrate further comprises a source of nitrogen, and wherein said source of nitrogen is ammonium lignosulfonate.

12. The method of any one of claims 6 to 11 comprising contacting the inoculum unit with one or more roots of the woody plant or placing the inoculum unit beneath the surface of the ground.

13. The method of any one of claims 6 to 12, wherein said woody plant is a tree or a tree stump.

14. The method of any one of claims 6 to 13, wherein said *Armillaria* population comprises *A. ostoyae, A. mellea, A. gallica* and/or *A. tabescens.*

15. The method of any one of claims 6 to 14, wherein said woody plant is from a species of pinus (*Pinus* spp.), cedar, firs (*Abies* spp.), spruces *(Picea* spp.), hemlocks (*Tsuga* spp.), maple (*Acer* spp.) birch *(Betula* spp.), oak *(Quercus* spp.), poplars *(Populus* spp.), ashes *(Fraxinus* spp.), stone fruit trees *(Prunus* spp.), brasswood (*Tilia* spp.) or blueberries *(Vaccinium* spp.) or is *Pseudotsuga menziesii* (Douglas-fir), *Pinus contorta* (lodgepole pine), *Pinus resinosa* (red pine) *Pinus strobus* (white pine), *Thuja plicata* (western red cedar), *Abies* spp., *Picea* spp., *Betula papyrifera, Quercus rubra, Populus tremuloides* or *Prunus nigra.*

## Patentansprüche

1. Isolierte Kultur von:
- *Hypholomafasiculare* (*H. fasiculare*), wobei die isolierte Kultur den *H. fasiculare*-Stamm Pinnel-B (DSM 32925) umfasst;
- *Hypholoma capnoides (H. capnoides),* wobei die isolierte Kultur den *H. capnoides*-Stamm TAK02 (DSM 33061) umfasst; oder
- *Hypholoma capnoides (H. capnoides),* wobei die isolierte Kultur den *H. capnoides*-Stamm TAK05 (DSM 33078) umfasst.

2. Inokulumeinheit, die Folgendes umfasst: (i) eine isolierte Kultur des *Hypholoma fasiculare*-Stamms Pinnel-B (DSM 32925), des *Hypholoma capnoides*-Stamms TAK02 (DSM 33061), des *Hypholoma capnoides*-Stamms TAK05 (DSM 33078) oder eine Kombination davon und (ii) ein Liefermedium.

3. Inokulumeinheit nach Anspruch 2, wobei das Liefermedium in einer festen oder flüssigen Form vorliegt.

4. Inokulumeinheit nach Anspruch 3, wobei das Liefermedium in fester Form vorliegt und ein festes Substrat umfasst.

5. Inokulumeinheit nach Anspruch 4, wobei das feste Substrat Holz, Sägemehl, Holzspäne, landwirtschaftliche Abfälle, Kleie-Getreide, zellulosehaltige Substanzen oder eine Mischung davon umfasst.

6. Verfahren zur Reduzierung einer *Armillaria*-Population oder zur Verzögerung oder Verhinderung der Ausbreitung eines etablierten Armillaria-Infektionszentrums im Boden, wobei das Verfahren das Inkontaktbringen einer holzigen Pflanze mit einer Inokulumeinheit umfasst, die eine isolierte Kultur von *Hypholoma fasciculare* (*H*. *fasciculare*), *Hypholoma capnoides* (*H. capnoides*), *Hypholoma sublateritium* (*H. sublateritium*) oder einer Kombination davon umfasst.

7. Verfahren nach Anspruch 6, wobei die isolierte Kultur von:
- *H. fasciculare* der *H. fasciculare*-Stamm Pinnel-B (DSM 32925), der *H. fasciculare*-Stamm OKM-2932-T (USDA), der *H. fasciculare*-Stamm RLG-12668-Sp (USDA) oder *fasciculare* HHB-14801-Sp (USDA) ist;
- *H. sublateritium H. sublateritium*-HHB-11948-Sp (USDA), *H. sublateritium-*FP-90085- Sp (USDA) oder eine Kombination davon ist; oder
- *H. capnoides H. capnoides*-TAK02 (DSM 33061), *H. capnoides*-TAK05 (DSM 33078) oder eine Kombination davon ist.

8. Verfahren nach Anspruch 6 oder 7, wobei die Inokulumeinheit in fester oder flüssiger Form vorliegt.

9. Verfahren nach Anspruch 8, wobei die Inokulumeinheit in fester Form vorliegt und ein festes Substrat umfasst.

10. Verfahren nach Anspruch 9, wobei das feste Substrat Holz, Sägemehl, Holzspäne, landwirtschaftliche Abfälle, Kleie-Getreide, zellulosehaltige Substanzen oder eine Mischung davon umfasst, wobei das feste Substrat optional ferner eine Stickstoffquelle umfasst.

11. Verfahren nach Anspruch 10, wobei das feste Substrat optional ferner eine Stickstoffquelle umfasst und wobei die Stickstoffquelle Ammoniumlignosulfonat ist.

12. Verfahren nach einem der Ansprüche 6 bis 11, bei dem die Inokulumeinheit mit einer oder mehreren Wurzeln der holzigen Pflanze in Kontakt gebracht wird oder die Inokulumeinheit unter die Erdoberfläche gebracht wird.

13. Verfahren nach einem der Ansprüche 6 bis 12, wobei die holzige Pflanze ein Baum oder ein Baumstumpf ist.

14. Verfahren nach einem der Ansprüche 6 bis 13, wobei die *Armillaria*-Population *A. ostoyae, A. mellea, A. gallica* und/oder *A. tabescens* umfasst.

15. Verfahren nach einem der Ansprüche 6 bis 14, wobei die holzige Pflanze aus einer Art von Kiefern (*Pinus spp*.), Zedern, Tannen (*Abies spp*.), Fichten (*Picea spp*.), Hemlocktannen (*Tsuga spp*.), Ahorn (*Acer spp*.), Birken (*Betula spp*.), Eichen *(Quercus spp*.), Pappeln (*Populus spp*.), Eschen (*Fraxinus spp*.), Steinobstbäumen (*Prunus spp*.), Messingholz (*Tilia spp*.) oder Heidelbeeren (*Vaccinium spp*.) stammt, oder *Pseudotsuga menziesii* (Douglasie), *Pinus contorta* (Drehkiefer), *Pinus resinosa* (Rotkiefer), *Pinus strobus* (Weißkiefer), *Thuja plicata* (Westliche Rotzeder), *Abies spp., Picea spp., Betula papyrifera, Quercus rubra, Populus tremuloides* oder *Prunus nigra* ist.

## Revendications

1. Culture isolée de :
- *Hypholoma fasiculare* (*H. fasiculare*), dans laquelle la culture isolée comprend la souche Pinnel-B d*'H. fasiculare* (DSM 32925) ;
- *Hypholoma capnoides (H. capnoides),* dans laquelle la culture isolée comprend la souche TAK02 d'*H*. *capnoides* (DSM 33061) ; ou
- Hypholoma capnoides (H. capnoides), dans lequel la culture isolée comprend la souche TAK05 d'H. capnoides (DSM 33078).

2. Unité d'inoculum comprenant (i) une culture isolée de la souche Pinnel-B d'*Hypholoma fasiculare* (DSM 32925), la souche TAK02 d*'Hypholoma capnoides* (DSM 33061), la souche TAK05 d*'Hypholoma capnoides* (DSM 33078) ou une combinaison de celles-ci et (ii) un milieu de délivrance.

3. Unité d'inoculum selon la revendication 2, dans laquelle ledit milieu de délivrance est sous forme solide ou sous forme liquide.

4. Unité d'inoculum selon la revendication 3, dans laquelle ledit milieu de délivrance est sous une forme solide et comprend un substrat solide.

5. Unité d'inoculum selon la revendication 4, dans laquelle ledit substrat solide comprend du bois, de la sciure, des copeaux de bois, des déchets agricoles, des céréales de son, des substances contenant de la cellulose ou un mélange de ceux-ci.

6. Procédé pour réduire une population d'*Armillaria* ou pour retarder ou empêcher la propagation d'un foyer d'infection à *Armillaria* établi dans le sol, ledit procédé comprenant la mise en contact d'une plante ligneuse avec une unité d'inoculum comprenant une culture isolée d'*Hypholoma fasciculare* (*H. fasciculare),* d'*Hypholoma capnoides (H. capnoides),* d'*Hypholoma sublateritium* (*H. sublatentium*) ou une combinaison de celles-ci.

7. Procédé selon la revendication 6, dans lequel ladite culture isolée de :
- *H. fasciculare* est la souche Pinnel-B d'*H. fasciculare* (DSM 32925), la souche OKM-2932-T d'*H. fasciculare* (USDA), la souche RLG-12668-Sp d'*H. fasciculare* (USDA) ou *H. fasciculare* HHB-14801-Sp (USDA) ;
- *H. sublateritium* est *H. sublaterititum* HHB-11948-Sp (USDA), *H. sublateritium* FP-90085-Sp (USDA) ou une combinaison de celles-ci ; ou
- *H. capnoides* est *H. capnoides* TAK02 (DSM 33061), *H. capnoides* TAK05 (DSM 33078) ou une combinaison de celles-ci.

8. Procédé selon la revendication 6 ou 7, dans lequel ladite unité d'inoculum est sous forme solide ou sous forme liquide.

9. Procédé selon la revendication 8, dans lequel ladite unité d'inoculum est sous forme solide et comprend un substrat solide.

10. Procédé selon la revendication 9, dans lequel ledit substrat solide comprend du bois, de la sciure, des copeaux de bois, des déchets agricoles, des céréales de son, des substances contenant de la cellulose ou un mélange de ceux-ci, éventuellement dans lequel ledit substrat solide comprend en outre une source d'azote.

11. Procédé selon la revendication 10, dans lequel ledit substrat solide comprend en outre une source d'azote, et dans lequel ladite source d'azote est le lignosulfonate d'ammonium.

12. Procédé selon l'une quelconque des revendications 6 à 11 comprenant la mise en contact de l'unité d'inoculum avec une ou plusieurs racines de la plante ligneuse ou le placement de l'unité d'inoculum sous la surface du sol.

13. Procédé selon l'une quelconque des revendications 6 à 12, dans lequel ladite plante ligneuse est un arbre ou une souche d'arbre.

14. Procédé selon l'une quelconque des revendications 6 à 13, dans lequel ladite population d'*Armillaria* comprend *A. ostoyae, A. mellea, A. gallica* et/ou *A. tabescens.*

15. Procédé selon l'une quelconque des revendications 6 à 14, dans lequel ladite plante ligneuse est issue d'une espèce de pinus (*Pinus spp*.), cèdre, sapins (*Abies spp*.), épicéas (*Picea spp*.), pruches (*Tsuga spp*.), d'érable (*Acer spp*.), bouleau (*Betula spp*.), chêne (*Quercus spp*.), peuplier (*Populus spp*.), frêne (*Fraxinus spp*.), d'arbres de fruits à noyau (*Prunus spp*.), tilleul (*Tilia spp*.) ou bleuets (*Vaccinium spp*.) ou est *Pseudotsuga menziesii* (sapin de douglas), *Pinus contorta* (pin lodgepole), *Pinus resinosa* (pin rouge), *Pinus strobus* (pin blanc), *Thuja plicata* (thuya géant), *Abies spp., Picea spp., Betula papyrifera, Quercus rubra, Populus tremuloides* ou *Prunus nigra.*
